# EUROPÄISCHE PATENTSCHRIFT

(11) **EP 1 926 942 B1**
(45) Veröffentlichungstag und Bekanntmachung des Hinweises auf die Patenterteilung: **10.12.2014**
(21) Anmeldenummer: 06775992.8
(22) Anmeldetag: 14.09.2006
(51) Int. Cl.: F24D 19/10, F24D 10/00

(54) **Wärmetauscher**
Heat exchanger
Echangeur thermique

(30) Priorität: 15.09.2005 DE 102005043952
(43) Veröffentlichungstag der Anmeldung: 04.06.2008
(73) Patentinhaber: Danfoss A/S, 6430 Nordborg (DK)
(72) Erfinder: BENONYSSON, Atli, DK-6400 Sønderborg (DK)
(86) Internationale Anmeldenummer: PCT/DK2006/000507
(87) Internationale Veröffentlichungsnummer: WO 2007/031087

(56) Entgegenhaltungen:
- EP-A1- 0 709 757
- EP-A2- 0 155 826
- WO-A-03/081348
- WO-A-2005/066571

## Beschreibung

Die Erfindung betrifft einen Wärmetauscher mit einem Gehäuse nach dem Oberbegriff des Anspruchs 1.

Ein solcher Wärmetauscher ist durch Dokument WO-A-2005/066571 schon bekannt.

Ein derartiger Wärmetauscher dient vor allem dazu, Brauchwasser und Heizungswasser in Wohneinheiten zu erwärmen, die von einem Fernheizungssystem mit Wärmeenergie versorgt werden. Die vom Fernheizungssystem gelieferte Wärmeträgerflüssigkeit, meistens heißes Wasser, durchströmt den primärseitigen Strömungspfad und gibt dabei Wärme an das Brauchwasser oder die Heizungsflüssigkeit ab, die durch den sekundärseitigen Strömungspfad strömt. In der Regel wird dabei der primärseitige Strömungspfad und der sekundärseitige Strömungspfad in entgegengesetzten Richtungen durchflossen, so daß das Wasser auf der Sekundärseite über eine Temperatur hinaus erwärmt werden kann, die die Flüssigkeit am Ausgang der Primärseite aufweist.

Um eine möglichst genaue Temperatureinstellung am Ausgang zu erhalten, steuert man den Strom der Wärmeträgerflüssigkeit auf der Primärseite in Abhängigkeit von der Wärme, die auf der Sekundärseite abgenommen wird. Dies soll im folgenden am Beispiel von Brauchwasser erläutert werden, das in dem Wärmetauscher erwärmt wird. Sobald Brauchwasser am Rücklaufanschluß der Sekundärseite entnommen wird, strömt kaltes Brauchwasser in den Zulaufanschluß nach. Dementsprechend muß praktisch gleichzeitig Wärmeträgerflüssigkeit durch den primärseitigen Strömungspfad strömen können, damit genügend Wärme an die Sekundärseite übertragen werden kann.

Um ein Ventil zu steuern oder sogar zu regeln, das auf der Primärseite den Flüssigkeitsstrom steuert, ist vielfach ein Temperatursensor erforderlich, mit dessen Hilfe man eine derartige Regelung durchführen kann.

Der Erfindung liegt die Aufgabe zugrunde, die Regelbarkeit und Überwachung des Wärmetauschers zu verbessern.

Diese Aufgabe wird bei einem Wärmetauscher der eingangs genannten Art durch die kennzeichnenden Merkmale des Anspruchs 1 gelöst,

Es ist vorgesehen, daß der zweite Temperatursensor mit einem Regler verbunden ist, der ein einen Fluidstrom durch die Primärseite steuerndes Ventil in Abhängigkeit von einer vom ersten Temperatursensor ermittelten Temperatur steuert, wobei der zweite Temperatursensor auf mindestens einen Regelparameter des Reglers einwirkt. Beispielsweise kann der zweite Temperatursensor auf die Verstärkung des Reglers einwirken, wenn es sich um einen P-Regler oder um einen Regler mit P-Anteil handelt (PI-Regler oder PID-Reg-Ier). Wenn man bei einem derartigen Regler die Verstärkung zu hoch wählt, dann riskiert man Schwingungen. Wenn man hingegen die Verstärkung zu niedrig wählt, dann besteht die Gefahr, daß der Regler zu langsam reagiert. Wenn man nun die Informationen, die vom zweiten Temperatursensor stammen, auswertet, dann kann man dafür sorgen, daß die Verstärkungen immer an gewisse Gegebenheiten angepaßt werden. Wenn beispielsweise die Belastung des Wärmetauschers relativ groß ist, was man durch eine Plazierung des zweiten Temperatursensors etwa in der Mitte der Wärmetauscherstrecke erfassen kann, dann wird man eine relativ große Verstärkung wählen, ohne daß man eine größere Schwingung befürchten muß. Das gleiche gilt, wenn man den zweiten Temperatursensor am Vorlaufanschluß plaziert. Wenn der zweite Temperatursensor hier eine niedrigere Temperatur ermittelt, dann wird man die Verstärkung des Reglers hochsetzen können. Umgekehrt wird man die Verstärkung verringern, wenn bereits die Eingangstemperatur am Vorlaufanschluß hoch ist oder der zweite Temperatursensor feststellt, daß die Belastung des Wärmetauschers niedrig ist.

Durch die Verwendung eines weiteren Temperatursensors erhält man mehr Zustandsinformationen aus dem Wärmetauscher. Je mehr Informationen man zur Verfügung hat, desto genauer kann man den Durchfluß des Wärmeträgermediums durch die Primärseite steuern. Darüber hinaus erlaubt der weitere Temperatursensor auch eine Aussage über die Verschmutzung des Wärmetauschers. Dies ist insbesondere bei Wärmetauschern von Vorteil, die bei der Wartung zerlegt werden können.

Vorzugsweise ist der zweite Temperatursensor mit einer vorbestimmten Entfernung entlang der Wärmetauscherstrecke relativ zum ersten Temperatursensor angeordnet. Man ordnet also den zweiten Temperatursensor an einer anderen Position an als den ersten Temperatursensor. Dies hat beispielsweise den Vorteil, daß man eine Temperaturänderung mit dem zweiten Temperatursensor bereits erfassen kann, bevor der erste Temperatursensor in der Lage ist, diese Temperatur zu melden. Man kann also gegebenenfalls früher in die Betätigung des Ventils auf der Primärseite eingreifen, also dieses Ventil beispielsweise früher öffnen oder schließen. Bereits mit zwei Temperatursensoren kann man grob den Temperaturverlauf über den Wärmetauscher abbilden. Die Abbildung gelingt natürlich um so besser, je mehr Temperatursensoren vorhanden sind.

Vorzugsweise ist der zweite Temperatursensor im Bereich der Mitte der Wärmetauscherstrecke angeordnet. Ein Temperatursensor in der Mitte der Wärmetauscheranordnung erlaubt eine Aussage über die Belastung des Wärmetauschers. Wenn man die Belastung kennt, kann man die Regelung des Ventils an der Primärseite so verbessern, daß man eine schnellere und genauere Reaktion bekommt, wenn man Wasser am Ablaufanschluß entnehmen möchte.

Alternativ oder zusätzlich dazu kann der zweite Temperatursensor im Bereich des Vorlaufanschluß angeordnet sein. Der zweite Temperatursensor ermittelt in diesem Fall die Temperatur der zuströmenden Flüssigkeit. Auch dies ist eine wertvolle Information. Wenn man die Eingangstemperatur des Brauchwassers oder des Heizungswassers auf der Sekundärseite kennt, dann kann man das Ventil auf der Primärseite auch in Abhängigkeit von der Temperaturdifferenz zwischen der Temperatur am Vorlauf und der gewünschten Temperatur am Ablaufanschluß ansteuern.

Auch ist von Vorteil, wenn die Auswerteeinrichtung einen Differenzbildner aufweist, der eine Temperaturdifferenz zwischen dem ersten und dem zweiten Temperatursensor ermittelt. Eine derartige Temperaturdifferenz kann nicht nur auf den Regler einwirken. Man kann auch über die Zeit feststellen, ob sich der Wärmetauscher zusetzt. Dieses sogenannte "Fouling" bewirkt nämlich, daß sich der Wärmeübergang zwischen der Primärseite und der Sekundärseite mit der Zeit verschlechtert. Diese Verschlechterung läßt sich sowohl über die Temperaturdifferenz als solche ermitteln als auch über den Verlauf einer Temperaturkennlinie.

Dies ist insbesondere dann der Fall, wenn der Differenzbildner mit einer Verlaufs-Überwachungseinrichtung verbunden ist. Man kann dann zu unterschiedlichen Zeiten feststellen, wie sich die Temperaturdifferenzen verhalten. Wenn man beispielsweise feststellt, daß die Temperaturdifferenz zwischen dem ersten Temperatursensor und dem zweiten Temperatursensor kleiner wird, obwohl die gleiche Wärmemenge auf der Primärseite zugeführt wird, dann läßt dies auf ein Verstopfen des Wärmetauschers schließen.

Die Erfindung wird im folgenden anhand eines bevorzugten Ausführungsbeispiels in Verbindung mit der Zeichnung näher beschrieben. Hierin zeigen
- Fig. 1: eine schematische Darstellung einer Wärmetauscheranordnung und
- Fig. 2: Kennlinien eines Wärmetauschers mit gegensinniger Durchströmung.

Ein Wärmetauscher 1 weist ein Gehäuse 2 auf, in dem eine Primärseite 3 und eine Sekundärseite 4 angeordnet sind. Die Primärseite 3 weist einen primärseitigen Strömungspfad 5 auf, der sich zwischen einem Vorlaufanschluß 6 und einem Rücklaufanschluß 7 erstreckt und in Richtung eines Pfeils 8 von einem nicht näher dargestellten Wärmeträgerfluid durchströmt werden kann. Das Wärmeträgerfluid wird beispielsweise von einer Fernheizungsanlage bereitgestellt. Der Wärmetauscher 1 dient im vorliegenden Ausführungsbeispiel dazu, Brauchwasser in einem Einfamilienhaus zu erwärmen.

Zur Steuerung der Strömung durch den primärseitigen Strömungspfad 5 ist ein Ventil 9 vorgesehen, das im vorliegenden Fall außerhalb des Gehäuses 2 angeordnet ist. Die Ansteuerung des Ventils 9 wird weiter unten besprochen werden.

Die Sekundärseite 4 weist einen sekundärseitigen Strömungspfad 10 auf, der sich zwischen einem Zulaufanschluß 11 und einem Ablaufanschluß 12 erstreckt. Der sekundärseitige Strömungspfad wird in Richtung eines Pfeiles 13 durchströmt, wenn eine Zapfstelle 14 geöffnet wird. Bei der Zapfstelle 14 kann es sich z.B. um einen Warmwasserhahn handeln.

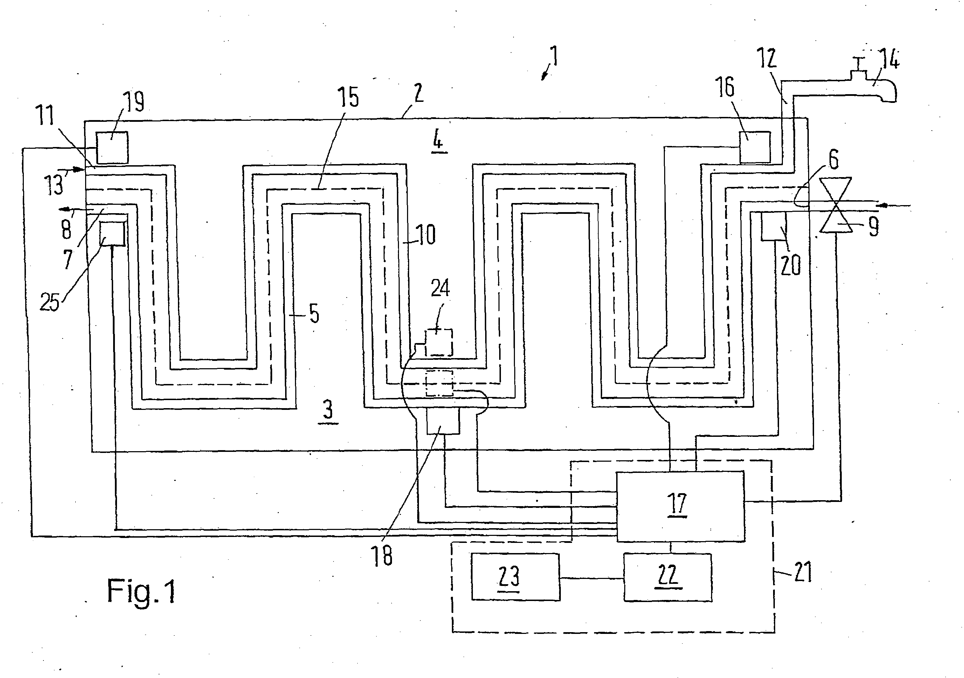

Wie durch eine gestrichelte Linie angedeutet ist, steht die Primärseite 3 mit der Sekundärseite 4 über eine Wärmetauscherstrecke 15 in wärmeübertragender Verbindung. Die Darstellung der Fig. 1 ist lediglich schematisch. Bei realen Wärmetauschern wird man den primärseitigen Strömungspfad 5 und den sekundärseitigen Strömungspfad beispielsweise dadurch realisieren, daß man gewellte oder gebogene Bleche aufeinander legt, so daß im Querschnitt eine Wabenstruktur entsteht. Einige dieser "Waben" gehören dann zum primärseitigen Strömungspfad 5, während die übrigen "Waben" zum sekundärseitigen Strömungspfad gehören. Die Wärmeübergangsflächenanordnung ist dann durch die Wände der Waben gebildet. Die Wärmeträgerflüssigkeit, die auf der Primärseite 3 im Gegenstrom zur Flüssigkeit auf der Sekundärseite 4 strömt, gibt über die Wärmetauscherstrecke 15 ihre Wärme an die Flüssigkeit auf der Sekundärseite ab. Aufgrund der gegensinnigen Durchströmung kann man die Temperatur der Flüssigkeit auf der Sekundärseite relativ hoch machen. In einer typischen Betriebsweise hat die dem Vorlaufanschluß zufließende Flüssigkeit eine Temperatur in der Größenordnung zwischen 60 und 120°C und verläßt den Wärmetauscher am Rücklaufanschluß mit einer Temperatur im Bereich von 15 bis 40°C (in Abhängigkeit von der abgegebenen Wärmemenge). Die Flüssigkeit auf der Sekundärseite tritt in den Zulaufanschluß mit einer Temperatur im Bereich von 5 bis 15°C ein und wird beim Durchströmen der Sekundärseite auf eine Temperatur in der Größenordnung von 50 bis 60°C erhitzt.

Zur Steuerung des Ventils 9 ist im Bereich des Ablauf-anschluß 12 ein erster Temperatursensor 16 angeordnet. Der erste Temperatursensor 16 ermittelt hauptsächlich die Temperatur der aus der Zapfstelle 14 zu entnehmenden Flüssigkeit, beispielsweise Brauchwasser. Er kann in geringem Umfang auch von der Temperatur auf der Primärseite 3 beeinflußt werden.

Wenn die Zapfstelle 14 geöffnet wird, dann strömt frisches Brauchwasser durch den sekundärseitigen Strömungspfad 10, so daß die Temperatur im Bereich des ersten Temperatursensors 16 absinkt. Der erste Temperatursensor 16 ist mit einem Regler 17 verbunden, der in Abhängigkeit von einer Temperaturdifferenz zwischen einem Sollwert und dem vom ersten Temperatursensor 16 ermittelten Istwert das Ventil aufsteuert, so daß die Primärseite 3 mit Wärmeträgerflüssigkeit mit einer erhöhten Temperatur durchströmt wird. Dabei wird Wärme auf die Sekundärseite 4 übertragen, so daß die Temperatur am Ablaufanschluß 12 über kurz oder lang den gewünschten Wert annimmt.

Zusätzlich ist ein zweiter Temperatursensor 24 auf der Sekundärseite 4 des Wärmetauschers 1 vorgesehen. Der zweite Temperatursensor 24 ist entlang der Wärmetauscherstrecke 15 mit einem gewissen Abstand zum ersten Temperatursensor 16 angeordnet. Im vorliegenden Fall ist er etwa in der Mitte der Wärmetauscherstrecke 15 angeordnet.

Mit Hilfe dieses zweiten Temperatursensors 24 ist man in der Lage, den Temperaturverlauf über die Länge der Sekundärseite 4 des Wärmetauschers 2 zu ermitteln. Um den Temperaturverlauf noch besser ermitteln zu können, kann man natürlich auch mehrere Sensoren verwenden, beispielsweise einen dritten Temperatursensor 19, der am Zulaufanschluß 11 angeordnet ist.

Der Temperaturverlauf erlaubt zwei Aussagen: Zum einen ergibt sich eine Aussage über die Belastung des Wärmetauschers 1. Dies gilt insbesondere dann, wenn man die Temperaturinformation des zweiten Temperatursensors 24 auswerten kann.

Wenn man die Temperaturinformation des dritten Temperatursensors 19 auswerten kann, erhält man eine Information über äußere Bedingungen, beispielsweise die Temperatur des zulaufenden Brauchwassers.

Schließlich kann man auch noch einen vierten Temperatursensor 20 im Bereich des Vorlaufanschluß 6 anordnen. Mit Hilfe des vierten Temperatursensors 20 kann man eine Aussage über die Eingangstemperatur bzw. die Temperaturdifferenz zwischen der Eingangstemperatur auf der Primärseite und der Ausgangstemperatur auf der Sekundärseite treffen. In ähnlicher Weise weist auch die Primärseite 3 einen fünften Temperatursensor 18 und einen sechsten Temperatursensor 25 auf, so daß auch der Temperaturverlauf auf der Primärseite 3 ermittelt werden kann.

Die Eingangstemperatur am Vorlaufanschluß 6 wird in diesem Ausführungsbeispiel von einem Fernwärmenetz gesteuert. Mit Hilfe der Temperatursensoren 16, 20 ist es möglich, die Temperatur an der Zapfstelle 14 relativ genau zu regeln.

Wenn man den Temperaturverlauf abbildet, dann kann man schneller auf Belastungsänderungen reagieren. Die Belastungsänderungen zeigen sich dann bereits vor einem Zeitpunkt, an dem män einen entsprechenden Temperaturabfall am Ablaufanschluß 12 der Sekundärseite 4 erfassen kann.

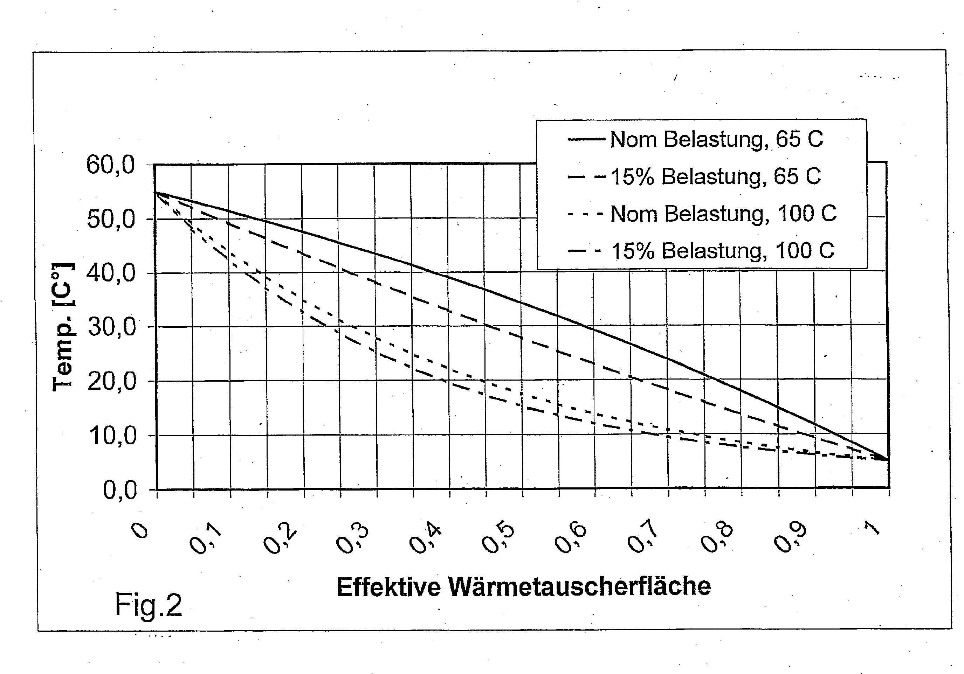

Fig. 2 zeigt den Temperaturverlauf des Wärmetauschers auf dem sekundärseitigen Strömungspfad 10. Es werden vier verschiedene Kennlinien A bis D gezeigt. Die Kennlinie A zeigt den Temperaturverlauf bei nomineller Belastung des Wärmetauschers. Die Vorlauftemperatur auf der Primärseite beim Vorlaufanschluß 6 beträgt 65°C, und die Zulauftemperatur des Brauchwassers beim Zulaufanschluß 11 ist 10°C. Die Temperatur steigt, je länger das zulaufende Brauchwasser in die Wärmetauscherstrecke eindringt. Beim Anbringen des zweiten Temperatursensors 24 in der Mitte, d.h. bei einer effektiven Wärmetauscherfläche von 0,5, würde eine Temperatur von ungefähr 34°C gemessen werden. Bei einer niedrigeren Belastung von 15 % fällt die Temperatur des Wärmetauschers in der Mitte auf 28°C ab, wie aus Kennlinie B zu sehen ist. Die Kennlinien C und D zeigen auch den Temperaturverlauf bei nomineller Belastung und bei 15 % Belastung, jedoch ist die Vorlauftemperatur der Primärseite jetzt 100°C. Die Kennlinie des Wärmetauschers ändert sich somit stark mit der Belastung und der Zulauftemperatur, und die Temperaturschwankung ist in der Mitte des Wärmetauschers am größten, weshalb der Temperatursensor 24 mit Vorteil hier angebracht wird.

Schließlich ist es auch möglich, mit dem Temperaturverlauf, der mit Hilfe der Temperatursensoren, d.h. mindestens mit Hilfe des zweiten Temperatursensors 18 oder mit Hilfe des dritten Temperatursensors 19, erfaßt wird, auf ein "Fouling" zu schließen, d.h. auf ein langsames Verstopfen des Wärmetauschers.

Wie aus Fig. 1 zu erkennen ist, sind die Temperatursensoren 16, 18-20, 24, 25 (es müssen nicht alle diese Temperatursensoren vorgesehen sein) mit dem Regler 17 verbunden. Diese Temperatursensoren 16, 18-20, 24, 25 sind in der Lage, auf mindestens einen Regelparameter des Reglers 17 einzuwirken. Bei diesem Regelparameter kann es sich beispielsweise um die Verstärkung handeln, also um das P-Glied bei einem P-, PI- oder PID-Regler. Wenn beispielsweise die Temperaturdifferenz zwischen dem Vorlaufanschluß 6 und dem Ablaufanschluß 12 zu groß ist, wird man die Verstärkung herabsetzen. Wenn beispielsweise die Temperatur an der Position eines weiteren Temperatursensors 18 abnimmt, obwohl die Außentemperatur auf der Sekundärseite gleich bleibt, dann wird man die Regelparameter des Reglers 17 ändern. Wenn der Regler als PI-Regler ausgebildet ist, dann wird man den Parameter P oder den Parameter I oder beide ändern, um eine verbesserte Reaktion des Reglers 17 auf Änderungen bewirken zu können. Beispielsweise muß der Regler bei einer hohen Einlaßtemperatur bei einem Belastungsanstieg nicht mehr so weit öffnen, wie bei einer niedrigen Einlaßtemperatur. Ähnliche Überlegungen gelten auch dann, wenn sich die Last oder Belastung ändert. Bei einer niedrigeren Temperatur sind dann unter Umständen größere Veränderungen in der Öffnung des Ventils 9 auf der Primärseite 3 erforderlich als bei hohen Temperaturen.

Der Regler 17 ist Bestandteil einer Auswerteeinrichtung 21, die auch einen Differenzbildner 22 und eine Verlaufs-Überwachungseinrichtung 23 aufweist. Der Differenzbildner 22 ermittelt eine Temperaturdifferenz zwischen dem ersten Temperatursensor 16 und dem Sensor 20, zwischen dem Sensor 24 und dem Sensor 18 sowie zwischen dem Sensor 19 und dem Sensor 25. Die Verlaufs-Überwa-chungseinrichtung überwacht diese Temperaturdifferenz über der Zeit. Der Differenzbildner erstellt somit punktweise lokale Temperaturdifferenzen gemessen an Primär- und Sekundärseite der Strömungspfade 5 und 10. Der Regler 17 ermittelt einen Durchschnitt jeder der lokalen Differenzen. Ein Durchschnitt kann z.B. über 24 Stunden errechnet werden. Insbesondere die Temperaturdifferenz zwischen den Temperatursensoren 19 und 25 ist interessant, denn an dieser Stelle wird der Temperatur-unterschied bei Verschmutzung des Wärmetauschers am größten und somit am deutlichsten. Wenn sich beispielsweise herausstellt, daß die Temperaturdifferenz bei ansonsten unveränderten Bedingungen zwischen dem Zulauf-anschluß 11 und dem Rücklaufanschluß 7 größer wird, dann wird das Wasser, das die Primärseite 3 durchströmt, nicht mehr so gut abgekühlt. Mit anderen Worten wird der Wärmeübergang von der Primärseite 3 auf die Sekundärseite 4 behindert. Dies ist ein eindeutiges Zeichen dafür, daß sich der Wärmetauscher 1 langsam zusetzt.

## Patentansprüche

1. Wärmetauscher mit einem Gehäuse (2), in dem eine Primärseite (3) mit einem primärseitigen Strömungspfad (5) zwischen einem Vorlaufanschluß (6) und einem Rücklaufanschluß (7) und eine Sekundärseite (4) mit einem sekundärseitigen Strömungspfad (10) zwischen einem Zulaufanschluß (11) und einem Ablaufanschluß (12) angeordnet ist, wobei die Primärseite (3) und die Sekundärseite (4) entlang einer Wärmetauscherstrecke (15) in wärmeübertragender Verbindung stehen und im Bereich des Ablaufanschluß (12) ein erster Temperatursensor (16) angeordnet ist, , und daß mindestens ein zweiter Temperatursensor (18-20, 24, 25) an der Wärmetauscherstrecke angeordnet ist und beide Temperatursensoren (16; 18-20, 24, 25) mit einer Auswerteeinrichtung (21) verbunden sind,
**dadurch gekennzeichnet, daß** der zweite Temperatursensor (18-20, 24, 25) mit einem Regler (17) verbunden ist, der ein einen Fluidstrom durch die Primärseite (3) steuerndes Ventil (9) in Abhängigkeit von einer vom ersten Temperatursensor (16) ermittelten Temperatur steuert, wobei der zweite Temperatursensor (18-20, 24, 25) auf mindestens einen Regelparameter des Reglers (17) einwirkt.

2. Wärmetauscher nach Anspruch 1, **dadurch gekennzeichnet, daß** der zweite Temperatursensor (24, 19) mit einer vorbestimmten Entfernung entlang der Wärmetauscherstrecke (15) relativ zum ersten Temperatursensor (16) angeordnet ist.

3. Wärmetauscher nach Anspruch 1 oder 2, **dadurch gekennzeichnet, daß** der zweite Temperatursensor (24) im Bereich der Mitte der Wärmetauscherstrecke (15) angeordnet ist.

4. Wärmetauscher nach einem der Ansprüche 1 bis 3, **dadurch gekennzeichnet, daß** der zweite Temperatursensor (19) im Bereich des Vorlaufanschluß (11) angeordnet ist.

5. Wärmetauscher nach einem der Ansprüche 1 bis 4, **dadurch gekennzeichnet, daß** die Auswerteeinrichtung (21) einen Differenzbildner (22) aufweist, der eine Temperaturdifferenz zwischen dem ersten und dem zweiten Temperatursensor (16, 20) ermittelt.

6. Wärmetauscher nach Anspruch 5, **dadurch gekennzeichnet, daß** der Differenzbildner (22) mit einer Verlaufs-Überwachungseinrichtung (23) verbunden ist.

## Claims

1. Heat exchanger having a housing (2), in which a primary side (3) is arranged with a primary-side flow path (5) between a flow connection (6) and a return connection (7) and a secondary side (4) is arranged with a secondary-side flow path (10) between a feed connection (11) and a discharge connection (12), wherein the primary side (3) and the secondary side (4) are in heat-transmitting connection along a heat-exchanger route (15) and a first temperature sensor (16) is arranged in the region of the discharge connection (12), and in that at least one second temperature sensor (18-20, 24, 25) is arranged on the heat-exchanger route and the two temperature sensors (16; 18-20, 24, 25) are connected to an evaluation device (21), **characterized in that** the second temperature sensor (18-20, 24, 25) is connected to a regulator (17), by means of which a valve (9), which controls a fluid stream through the primary side (3), is controlled in dependence on a temperature determined by the first temperature sensor (16), wherein the second temperature sensor (18-20, 24, 25) acts on at least one regulating parameter of the regulator (17).

2. Heat exchanger according to Claim 1, **characterized in that** the second temperature sensor (24, 19) is arranged along the heat-exchanger route (15) at a predetermined distance from the first temperature sensor (16).

3. Heat exchanger according to Claim 1 or 2, **characterized in that** the second temperature sensor (24) is arranged in the region of the centre of the heat-exchanger route (15).

4. Heat exchanger according to one of Claims 1 to 3, **characterized in that** the second temperature sensor (19) is arranged in the region of the feed connection (11).

5. Heat exchanger according to one of Claims 1 to 4, **characterized in that** the evaluation device (21) has a difference-calculating unit (22), which determines a temperature difference between the first and the second temperature sensor (16, 20).

6. Heat exchanger according to Claim 5, **characterized in that** the difference-calculating unit (22) is connected to a progression-monitoring device (23).

## Revendications

1. Échangeur thermique comprenant un boîtier (2), dans lequel un côté primaire (3) est disposé avec un chemin d'écoulement du côté primaire (5) entre un raccordement d'aller (6) et un raccordement de retour (7) et un côté secondaire (4) avec un chemin d'écoulement du côté secondaire (10) entre un raccordement d'alimentation (11) et un raccordement d'écoulement (12), le côté primaire (3) et le côté secondaire (4) étant en liaison de transfert thermique le long d'une section d'échange thermique (15) et un premier capteur de température (16) étant disposé dans la région du raccordement d'écoulement (12), au moins un deuxième capteur de température (18-20, 24, 25) étant disposé au niveau de la section d'échange thermique et les deux capteurs de température (16 ; 18-20, 24, 25) étant connectés à un dispositif d'analyse (21),
**caractérisé en ce que** le deuxième capteur de température (18-20, 24, 25) est connecté à un régulateur (17) qui commande une soupape (9) commandant un écoulement de fluide à travers le côté primaire (3) en fonction d'une température déterminée par le premier capteur de température (16), le deuxième capteur de température (18-20, 24, 25) agissant sur au moins un paramètre de régulation du régulateur (17).

2. Échangeur thermique selon la revendication 1, **caractérisé en ce que** le deuxième capteur de température (24, 19) est disposé à une distance prédéterminée le long de la section d'échange thermique (15) par rapport au premier capteur de température (16).

3. Échangeur thermique selon la revendication 1 ou 2, **caractérisé en ce que** le deuxième capteur de température (24) est disposé dans la région du centre de la section d'échange thermique (15).

4. Échangeur thermique selon l'une quelconque des revendications 1 à 3, **caractérisé en ce que** le deuxième capteur de température (19) est disposé dans la région du raccordement d'alimentation (11).

5. Échangeur thermique selon l'une quelconque des revendications 1 à 4, **caractérisé en ce que** le dispositif d'analyse (21) présente un moyen de différenciation (22) qui détermine une différence de température entre le premier et le deuxième capteur de température (16, 20).

6. Échangeur thermique selon la revendication 5, **caractérisé en ce que** le moyen de différenciation (22) est connecté à un dispositif de contrôle de fonctionnement (23).
